# EUROPÄISCHE PATENTSCHRIFT

(11) **EP 2 705 590 B1**
(45) Veröffentlichungstag und Bekanntmachung des Hinweises auf die Patenterteilung: **14.12.2016**
(21) Anmeldenummer: 12728058.4
(22) Anmeldetag: 12.06.2012
(51) Int. Cl.: H02K 1/27

(54) **ROTOR FÜR EINE PERMANENTMAGNETISCHE MASCHINE**
ROTOR FOR A PERMANENT-MAGNET MACHINE
ROTOR POUR UNE MASCHINE À AIMANTS PERMANENTS

(30) Priorität: 14.06.2011 DE 102011077452
(43) Veröffentlichungstag der Anmeldung: 12.03.2014
(73) Patentinhaber: Siemens Aktiengesellschaft, 80333 München (DE)
(72) Erfinder: KLÖPZIG, Markus, 91320 Ebermannstadt (DE); ROTHFISCHER, Johann, 91058 Erlangen (DE); SCHLEICHER, Klaus, 90489 Nürnberg (DE)
(86) Internationale Anmeldenummer: PCT/EP2012/061071
(87) Internationale Veröffentlichungsnummer: WO 2012/171894

(56) Entgegenhaltungen:
- EP-A2- 1 777 795
- EP-A2- 1 914 864
- DE-A1- 3 135 924
- DE-A1-102007 022 835
- FR-A1- 2 604 312
- JP-A- 2004 096 978

## Beschreibung

Die Erfindung betrifft einen Rotor für eine permanentmagnetische Maschine, insbesondere einen Elektromotor.

Im Stand der Technik sind verschiedene Ausführungsformen von permanentmagnetischen Rotoren bekannt. Beispielsweise beschreibt DE 10 2008 032 844 A1 einen permanentmagnetischen Rotor, der aus einem Stapel von Rotorblechen aufgebaut ist. In den Rotorblechen sind Taschen zur Aufnahme der Permanentmagnete vorgesehen.

Aus EP 1 203 436 B2 ist eine elektrische Axialflussmaschine bekannt, bei der der Rotor im Wesentlichen aus Kunststoff aufgebaut ist und mehrere Permanentmagneten aufweist.

Aus EP 1 914 864 A2 ist eine Anordnung zur Befestigung von Permanentmagneten an schnelldrehenden Rotoren von elektrischen Maschinen bekannt. Die Permanentmagnete werden durch abwechselnd zwischengeordnete keil- oder klauenförmige Profilteile am Rotor befestigt, wobei in der Außenfläche des Rotors koaxial verlaufende Rotornuten eingebracht sind, deren Schenkel bezüglich der Radialrichtung nach außen wenigstens stückweise divergierende Kontaktflächen für angepasst divergierende Kontaktflächen der Profilteile aufweisen, um den Profilteilen formschlüssigen Halt gegen Fliehkräfte zu bieten, und dass die Profilteile aus nichtmagnetischem Material so geformt sind, dass sie paarweise klauenförmig die Permanentmagnete formschlüssig gegen Fliehkräfte der Rotordrehung zurückhalten. Die Profilteile erstrecken sich in koaxialer Richtung über den gesamten Rotor.

Aus EP 1 777 795 A2 ist ein Rotor mit einer Polanordnung bekannt, die eine Permanentmagnetanordnung mit einem Polschuh und einem Polrücken aufweist.

Aus DE 10 2007 022 835 A1 ist ein Rotor für permanentmagnetisch erregte Elektromaschinen mit vergrabenen Magneten für hohe Umfangsgeschwindigkeiten bekannt. Dabei sind Blechschnitte des Blechpakets jeweils aus einer Blechronde mit gleich verteilt eingebrachten Ausnehmungen für die Magnete und aus dazwischen in komplementär geformte Aussparungen eingefügten Einsatzblechen ausgebildet, wobei die Blechronde zwischen den Ausnehmungen radiale Materialverbindungen mit einem peripheren Teil der Blechronde zur Abdeckung und zum radialen Rückhalten der Magnete gegen Fliehkräfte aufweist. Die Einsatzbleche sind mindestens an einem zur Rotorachse ausgerichteten Fußpunkt und an den Seitenkanten mit den peripheren Teilen der Blechronde mindestens in radialer Richtung formschlüssig verankert, wobei die Blechronde und Einsatzbleche aus Materialien mit unterschiedlichen magnetischen Eigenschaften bestehen, von denen eines amagnetisch ist.

Aus FR 2 604 312 A1 ist ein Rotor mit zwei alternierenden Schichten aus nicht magnetisch leitendem bzw. magnetisch leitendem Material bekannt, wobei die Permanentmagnete nicht mit der magnetisch leitenden Schicht verbunden sind.

Die Aufgabe der Erfindung besteht darin, einen verbesserten Rotor bereitzustellen.

Die Aufgabe der Erfindung wird durch den Rotor gemäß Patentanspruch 1 gelöst. Der Rotor gemäß Patentanspruch 1 hat den Vorteil, dass eine Entkopplung zwischen Drehmomentübertragung und magnetischem Rückschluss vorgesehen ist. Dies wird insbesondere dadurch erreicht, dass der Rotor geschichtet aufgebaut ist und wenigstens eine Schicht aus einem nicht magnetisch leitenden Material und eine Schicht aus einem magnetisch leitenden Material aufweist, wobei die Permanentmagnete sowohl auf der magnetischen Schicht als auch auf der nichtmagnetischen Schicht abgestützt sind. Durch die nicht magnetisch leitende Schicht ist es möglich, eine mechanisch sehr stabile Schicht zu verwenden, um die hohen Fliehkräfte der Permanentmagnete sicher abzufangen. Dadurch wird zum Einen ein sehr robuster Aufbau des Rotors erreicht und zum Anderen eine gute Führung des Magnetflusses ermöglicht.

In einer weiteren Ausführungsform ist zwischen den Permanentmagneten und der magnetisch nicht leitenden Schicht des Rotors ein magnetisch leitendes Einlegeteil als Polrücken vorgesehen. Das Einlegeteil ist seitlich zu der magnetisch leitenden Schicht des Rotors angeordnet. Auf diese Weise wird ein Magnetfluss ermöglicht, obwohl der Permanentmagnet auf der magnetisch nicht leitenden Schicht abgestützt ist.

In einer weiteren Ausführungsform sind die Haltestege der magnetisch leitenden Schicht aus einem nicht magnetisch leitenden Material hergestellt. Auf diese Weise wird eine magnetisch leitende Verbindung zwischen benachbarten Permanentmagneten vermieden. Somit wird der magnetische Kurzschluss verhindert.

In einer weiteren Ausführungsform sind die Haltestege der magnetisch leitenden Schicht als Einlegeteile ausgebildet. Auf diese Weise können die Haltestege aus einem anderen Material als die magnetisch leitende Schicht und unabhängig von der magnetisch leitenden Schicht hergestellt werden. Zudem kann durch ein formschlüssiges Einlegen in die magnetisch leitende Schicht der Haltesteg mechanisch mit der magnetisch leitenden Schicht verbunden werden. Somit ist eine erhöhte Flexibilität bei der Ausbildung des Haltestegs gegeben.

In einer weiteren Ausführungsform ist jedem Permanentmagneten ein Polschuh zugeordnet, wobei der Polschuh im Aufnahmebereich angeordnet ist und formschlüssig am Haltesteg befestigt ist. Auf diese Weise wird der Permanentmagnet mechanisch gestützt und die Maschine kann ein zusätzliches Reluktanzmoment abgeben.

In einer weiteren Ausführungsform ist der Polschuh in der ersten Schicht einteilig mit wenigstens einem Haltesteg der ersten Schicht ausgebildet und besteht aus einem nicht magnetisch leitenden Material. Dadurch wird eine erhöhte mechanische Stabilität erreicht.

In einer weiteren Ausführungsform ist der Polschuh der zweiten Schicht einteilig mit der zweiten Schicht ausgebildet. Dadurch wird eine erhöhte mechanische Stabilität erreicht.

In einer weiteren Ausführungsform sind der Permanentmagnet und der Polschuh über eine Klebeschicht miteinander verbunden. Damit ist eine einfache und sichere mechanische Fixierung des Permanentmagneten und des Polschuhs gegeben.

In einer weiteren Ausführungsform ist der Polschuh aus mehreren Schichten aufgebaut, wobei die Schichten parallel zu den Rotorschichten isoliert ausgerichtet sind. Auf diese Weise werden magnetische Flusssperren im Polschuh ausgebildet, die die Ausbildung von Wirbelströmen unterdrücken.

In einer weiteren Ausführungsform sind die Aufnahmebereiche in der ersten und der zweiten Schicht des Rotors unterschiedlich ausgebildet, wobei in der zweiten Schicht ein Raum für das Einlegeteil vorgesehen ist. Im Gegensatz dazu ist die zweite Schicht im Aufnahmebereich bis zu den Permanentmagneten geführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei
- Figur 1: eine Teildarstellung eines ersten Querschnitts durch eine erste Schicht des Rotors,
- Figur 2: einen Querschnitt durch eine zweite Schicht des Rotors,
- Figur 3: einen Querschnitt durch einen Permanentmagneten des Rotors in axialer Richtung,
- Figur 4: eine schematische Teildarstellung des Rotors mit einem Stator in der Ebene der zweiten Schicht, und
- Figur 5: eine Teildarstellung des Rotors mit Stator in der Ebene der ersten Schicht mit Darstellung der Magnetfeldlinien zeigt.

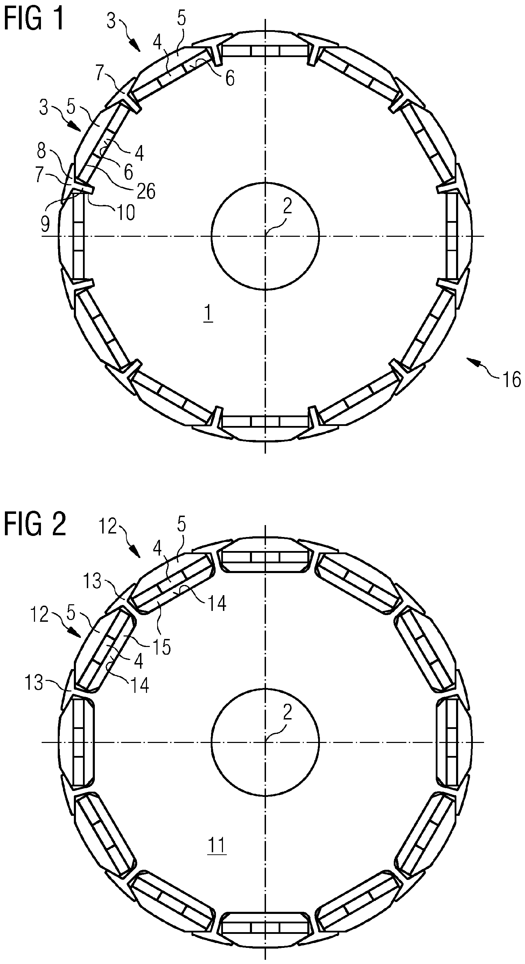

Figur 1 zeigt einen Querschnitt durch eine erste Schicht 1 eines Rotors 16. Die erste Schicht 1 weist im Wesentlichen im Querschnitt eine Kreisscheibenform auf, die rotationssymmetrisch um eine Drehachse 2 ausgebildet ist. Die erste Schicht 1 besteht aus einem magnetisch leitfähigen Material. In einem radialen Randbereich sind Aufnahmebereiche in Form von Taschen 3 vorgesehen, in denen Permanentmagnete 4 mit Polschuhen 5 angeordnet sind. Die Permanentmagnete 4 können über eine Klebeschicht 26 mit den Polschuhen 5 verbunden sein. Die Klebeschicht 26 ist aber nicht unbedingt erforderlich. Abhängig von der Ausführungsform kann auch auf die Polschuhe 5 verzichtet werden. Die Permanentmagnete 4 liegen an Auflageflächen 6 der ersten Schicht 1 auf. Gegenüberliegend zur ersten Schicht 1 ist auf einer radial äußeren Seite ein Polschuh 5 auf dem Permanentmagneten 4 angeordnet. Der Polschuh 5 ist aus einem magnetisch leitenden Material hergestellt. Die Taschen 3 werden in der Ebene der ersten Schicht 1 durch zwei gegenüberliegend angeordnete Haltestege 7 begrenzt. Die Haltestege 7 weisen im Querschnitt eine T-Form auf, wobei ein Querbalken 8 in der Ebene der ersten Schicht 1 angeordnet ist und mit seinen zwei Schenkeln jeweils einen Polschuh 5 formschlüssig in der Tasche 3 festhält. Der Querbalken 8 ist mit einem Verbindungsstück 9 verbunden. Der Haltesteg 7 ist als separates Bauteil ausgebildet und mechanisch mit einem Verbindungsstück 9 mit der ersten Schicht 1 verbunden. Das Verbindungsstück 9 ist in radialer Richtung zur Drehachse 2 ausgerichtet. Das Verbindungsstück 9 kann beispielsweise über eine Klebeverbindung und/oder über eine formschlüssige Verbindung in Form eines Schwalbenschwanzes mit der ersten Schicht 1 verbunden sein. Dazu weist die erste Schicht 1 eine entsprechende nach außen konisch zulaufende Ausnehmung 10 auf, in die das Verbindungsstück 9 eingelegt ist. Der Querbalken 8 weist auf einer Außenseite in radialer Richtung die Form einer Kreislinie auf. Ebenso weisen die Polschuhe 5 in radialer Richtung auf einer Außenseite die Form einer Kreislinie auf. Auf diese Weise ergibt sich aus den Außenflächen der Polschuhe 5 und aus den Außenflächen der Querbalken 8 der Haltestege 7 annähernd eine Kreislinie.

Die Polschuhe 5 liegen formschlüssig auf den Permanentmagneten 4 auf. Auf diese Weise sind die Permanentmagnete 4 und die Polschuhe 5 formschlüssig in den Taschen 3 der ersten Schicht 1 gehalten. Benachbarte Permanentmagnete 4 weisen unterschiedliche Magnetisierungsrichtungen auf der radialen Außenseite auf, so dass sich magnetische Nordpole und magnetische Südpole auf der Außenseite der ersten Schicht 1 abwechseln.

Die Haltestege 7 bestehen aus magnetisch nicht leitfähigem Material, so dass ein magnetischer Kurzschluss zwischen benachbarten Permanentmagneten unterschiedlicher Polung vermieden wird. Insbesondere wird ein Kurzschluss zwischen den Polschuhen 5 benachbarter Taschen vermieden. Der Polschuh 5 kann auch zusammen mit den Haltestegen als ein Teil ausgeführt werden. Im Gegensatz zur geteilten Ausführung wird der Polschuh hier aus nichtmagnetischem Material ausgeführt. Die geometrische Bauform des Polschuhes wird dann vorzugsweise flacher ausgeführt. Abhängig von der gewählten Ausführungsform ist der Polschuh 5 in der Ebene der ersten Schicht 1 mit wenigstens einem Haltesteg 7 verbunden, insbesondere einteilig ausgeführt. Der Polschuh 5 ist aus einem magnetisch nicht leitenden Material, insbesondere aus dem gleichen Material wie der Haltesteg 7 hergestellt. Abhängig von der gewählten Ausführung können mehrere Polschuhe und mehrere Haltestege 7 in der Ebene der ersten Schicht 1 miteinander verbunden oder einteilig ausgebildet sein.

Auf der ersten Schicht 1 liegt eine zweite Schicht 11 des Rotors 16 auf, die in Figur 2 dargestellt ist. Die zweite Schicht 11 besteht aus einem magnetisch nicht leitfähigen Material, das eine größere Festigkeit und/oder Härte und/oder Belastbarkeit als die erste Schicht 1 aufweist. Die zweite Schicht 11 ist symmetrisch zu der Drehachse 2 ausgebildet und weist in einem radial umlaufenden Randbereich weitere Aufnahmebereiche in Form von weiteren Taschen 12 zur Aufnahme der Permanentmagnete 4 und der Polschuhe 5 auf. Im Gegensatz zu der ersten Schicht 1 sind weitere Haltestege 13, die die weiteren Taschen 12 seitlich begrenzen, einteilig mit der zweiten Schicht 11 ausgebildet. Die weitere Tasche 12 weist im Gegensatz zur Tasche 3 der ersten Schicht 1 eine größere Tiefe in Richtung auf die Drehachse 2 auf. Zwischen einer weiteren Anlagefläche 14 und dem Permanentmagneten 4 ist jeweils ein Einlegeteil 15 aus einem magnetisch leitenden Material angeordnet. Das Einlegeteil kann aus dem gleichen Material wie die erste Schicht hergestellt sein. Das Einlegeteil 15 weist jeweils die Dicke der zweiten Schicht 11 auf. Das Einlegeteil 15 stellt einen Polrücken dar. Die weiteren Haltestege 13 halten die Baugruppe bestehend aus dem Polschuh 5, der Permanentmagneten 4 und dem Einlegeteil 15 formschlüssig in der weiteren Tasche 12. Der Polschuh 5 kann auch zusammen mit den Haltestegen und damit mit der kompletten zweiten Schicht als ein Teil ausgeführt werden. Im Gegensatz zur geteilten Ausführung wird der Polschuh hier aus nichtmagnetischem Material ausgeführt. Die geometrische Bauform des Polschuhes wird dann vorzugsweise flacher ausgeführt. Abhängig von der gewählten Ausführungsform können die Polschuhe 5 in der Ebene der zweiten Schicht mit den weiteren Haltestegen 13 fest verbunden, insbesondere einteilig ausgebildet sein. Die Polschuhe 5 sind dabei aus magnetisch nicht leitendem Material, insbesondere aus dem gleichen Material wie die zweite Schicht 11.

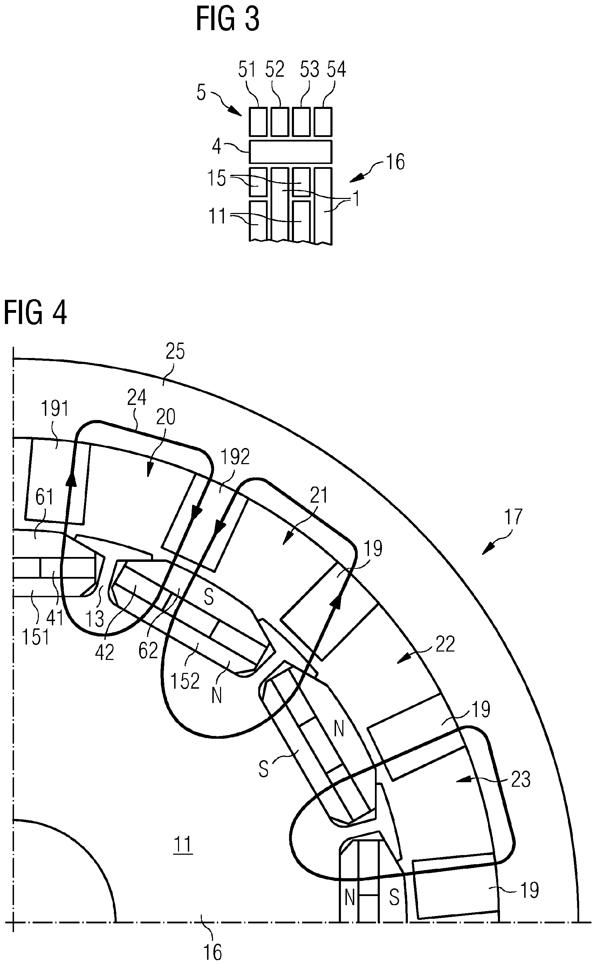

Figur 3 zeigt einen Querschnitt durch einen Permanentmagneten 4, einen Polschuh 5 und Teile erster und zweiter Schichten 1, 11 eines Rotors 16 in radialer Richtung und parallel zur Drehachse 2. In der dargestellten Ausführungsform ist der Polschuh 5 geschichtet aus mehreren Teilschichten 51, 52, 53, 54 dargestellt. Die Teilschichten des Polschuhs 5 sind parallel und symmetrisch zu den Ebenen der ersten und der zweiten Schichten 1, 11 angeordnet. In dem dargestellten Ausführungsbeispiel weist der Rotor 16 abwechselnd eine erste und eine zweite Schicht 1, 11 auf, wobei insgesamt zwei erste und zwei zweite Schichten 1, 11 vorgesehen sind.

Die Haltestege 7 und die weiteren Haltestege 13 weisen jeweils die Dicke der ersten bzw. der zweiten Schicht 1, 11 auf. Der Permanentmagnet 4 ist in axialer Richtung parallel zur Drehachse 2 ausgerichtet und weist eine Länge auf, die der Dicke des Rotors 16 in der Richtung der Drehachse 2, d. h. der Dicke der vier ersten und zweiten Schichten entspricht. Ebenso weist der Polschuh 5, der aus einem magnetisch leitenden Material besteht, eine Länge auf, die der Länge des Rotors in axialer Richtung der Drehachse 2 entspricht. Die Einlegeteile 15 stellen Polfüße dar und ermöglichen einen Magnetfluss seitlich in benachbarte erste Schichten 1.

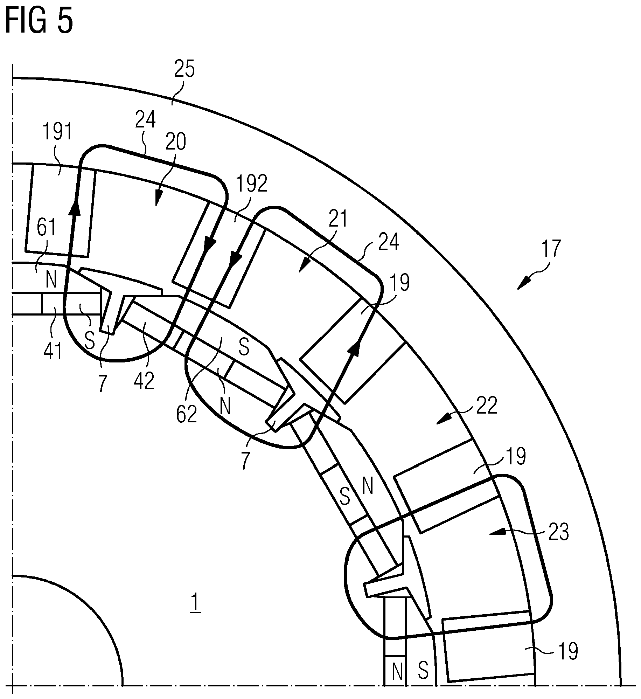

Figur 4 zeigt einen schematischen Teilausschnitt einer elektrischen Maschine mit einem Rotor 16 in der Ebene einer zweiten Schicht 11 und mit einem außen liegenden Stator 17. Der Stator 17 umgibt ringförmig den Rotor 16. Die Statorwicklung kann als konzentrierte Wicklung oder als verteilte Wicklung ausgeführt werden. Charakteristischerweise bildet sich der magnetische Fluss in den beiden Ebenen verschieden aus. Dies ist exemplarisch in Fig. 4 und Fig. 5 dargestellt.

Leitungsabschnitte 20, 21, 22, 23 der Wicklung sind in radialer Richtung zwischen benachbarten Statorpolen 19 angeordnet und verlaufen senkrecht zur Blattebene. Aufgrund der Permanentmagnete 4 ergibt sich die in Figur 4 dargestellte Magnetflussverteilung, die mit Hilfe von Magnetflusslinien 24 eingezeichnet ist. Um den ersten Leitungsabschnitt 20 ergibt sich eine Magnetflusslinie 24, die in einem ersten Einlegteil 151 beginnt, über einen ersten Permanentmagneten 41 nach oben und über einen ersten Polschuh 61 in einen ersten Statorpol 191 in Richtung auf ein Statorjoch 25 fließt. Das Statorjoch 25 ist ringförmig ausgebildet. Über das Statorjoch 25 geht die Magnetflusslinie 24 im Uhrzeigersinn zu einem benachbarten zweiten Statorpol 192. Vom zweiten Statorpol 192 geht die Magnetflusslinie 24 über einen zweiten Polschuh 62, einen zweiten Permanentmagneten 42 bis zu dem darunter liegenden zweiten Einlegeteil 152. Vom zweiten Einlegeteil 152 geht die Magnetfeldlinie 24 über die zweite Schicht 11 mit einer Dämpfung des Magnetfelds entgegen dem Uhrzeigersinn zurück in das erste Einlegeteil 151 des ersten Permanentmagneten 41.

Figur 5 zeigt den Rotor 16 in der benachbarten Ebene zur Figur 4 und zwar in der Ebene der ersten Schicht 1. In der ersten Schicht 1 kann die Magnetflusslinie 24 mit weniger Verlust ringförmig um die Leitungsabschnitte 20, 21, 22, 23 ausgebildet werden, da die Schicht 1 aus einem magnetisch leitenden Material besteht. Die Haltestege 7 sind dabei aus einem magnetisch nicht leitenden Material, beispielsweise aus dem gleichen Material wie die erste Schicht 1 gebildet. Somit kann kein Kurzschluss zwischen den in der Ebene der ersten Schicht 1 benachbarten Polschuhen 5 erfolgen, sondern der Magnetfluss fließt in der annähernd kreisförmig ausgebildeten Magnetflusslinie 24 über die Statorpole 19, 191, 192, wie dargestellt. Die Permanentmagnete 4 sind in der gewählten Ausführungsform vorzugsweise geteilt ausgebildet, so dass anstelle eines einzelnen Permanentmagneten 4 drei Stäbe von Permanentmagneten 4 parallel zur Drehachse 2 vorgesehen sind.

Durch die Kombination der ersten und zweiten Schicht 1, 11 für den Rotor 16 aus magnetisch leitfähigem Material und magnetisch nicht leitfähigem Material, beispielsweise unmagnetischen Blechen und magnetischen Blechen, kann eine hohe mechanische Stabilität bei geringen Magnetfeldverlusten erreicht werden. Somit kann auch bei hoher Belastung eine hohe mechanische Zeitfestigkeit des Rotors, d. h. des Elektromotors, ermöglicht werden.

Die Dimensionierungen der Einzelteile der elektrischen Maschine sind in den Figuren nur schematisch dargestellt.

Obwohl die Erfindung im Detail durch das bevorzugte Ausführungsbeispiel näher illustriert und beschrieben wurde, ist die Erfindung nicht auf die offenbarten Beispiele eingeschränkt. Ein Fachmann kann aufgrund der beschriebenen Ausführungsbeispiele auch andere Variationen hieraus ableiten, ohne den Schutzumfang der Erfindung zu verlassen.

Die Erfindung wurde am Beispiel eines innen liegenden Rotors 16 mit Permanentmagneten beschrieben. Anstelle der dargestellten Ausführungsformen kann die Erfindung auch auf außen liegende Rotoren angewendet werden, wobei dann der Stator innerhalb des Rotors angeordnet ist. Zudem wurden in dem Beispiel sechs Paare von Nordpol- und Südpol-Permanentmagneten verwendet. Abhängig von der gewählten Ausführungsform können auch mehr oder weniger Paare von Permanentmagneten verwendet werden.

Aufgrund der beschriebenen Ausführungsform variiert der Luftspalt zwischen dem Rotor und dem Stator in der Weise, dass in der Polschuhmitte der Luftspalt am kleinsten und damit der magnetische Fluss am größten ist. An den Polschuhenden in der in den Figuren dargestellten Ebene senkrecht zur Drehachse 2 sind die Polschuhe in radialer Richtung nach innen abgeflacht und somit ist der Abstand zwischen dem Polschuh und dem Stator vergrößert. Dadurch werden das Rastmoment und die Drehmomentwelligkeit verbessert

Die mechanische Konstruktion des Rotors ist ohne negative Einflüsse auf das magnetische Design verbessert. Somit kann der Rotor für höhere Drehzahlen verwendet werden. Zudem ist die mechanische und die magnetische Funktion der Jochstruktur des Rotors durch den Aufbau aus magnetisch leitfähigen und nicht leitfähigen Materialien deutlich gegliedert.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Rotor (16) für eine permanentmagnetische Maschine mit wenigstens zwei unterschiedlich gepolten Permanentmagneten, wobei der Rotor wenigstens zwei Schichten (1, 11) aufweist, wobei eine erste Schicht (1) aus einem magnetisch leitenden Material und eine zweite Schicht (11) aus einem magnetisch nicht leitenden Material gebildet ist, **dadurch gekennzeichnet, dass** die erste und die zweite Schicht (1, 11) in Form eines Schichtpaketes angeordnet sind und zwei Aufnahmebereiche (3, 12) bilden, die seitlich von Haltestegen (7, 13) der jeweiligen Schicht (1, 11) begrenzt sind, dass die Permanentmagnete (4) in den Aufnahmebereichen (3, 12) angeordnet sind, dass der erste und der zweite Permanentmagnet (4) mit der ersten Schicht (1) magnetisch leitend verbunden ist, und dass die Haltestege (7) der magnetisch leitenden ersten Schicht (1) aus einem nicht magnetisch leitenden Material bestehen.

2. Rotor nach Anspruch 1, **dadurch gekennzeichnet, dass** zwischen dem ersten und den zweiten Permanentmagneten (4) und der magnetisch nicht leitenden zweiten Schicht (11) ein magnetisch leitendes Einlegeteil (15) als Polrücken vorgesehen ist, und dass das Einlegeteil (15) seitlich neben der magnetisch leitenden ersten Schicht (1) angeordnet ist.

3. Rotor nach einem der Ansprüche 1 oder 2, **dadurch gekennzeichnet, dass** die Haltestege (7) der magnetisch leitenden ersten Schicht (1) als Einlegeteile ausgebildet sind, die formschlüssig mit der ersten Schicht (1) verbunden sind.

4. Rotor nach Anspruch 3, **dadurch gekennzeichnet, dass** die Haltestege (7) mithilfe einer Schwalbenschwanzverbindung insbesondere formschlüssigen Verbindung mit der ersten Schicht (1) verbunden sind.

5. Rotor nach einem der Ansprüche 1 bis 4, **dadurch gekennzeichnet, dass** jedem Permanentmagnet (4) ein Polschuh (5) zugeordnet ist, dass der Polschuh (5) in dem Aufnahmebereich (3, 12) angeordnet ist und formschlüssig mit den Haltestegen (7, 13) befestigt ist.

6. Rotor nach einem der Ansprüche 1 bis 4, **dadurch gekennzeichnet, dass** der Polschuh (5) in der ersten Schicht (1) einteilig mit wenigstens einem Haltesteg (7) ausgeführt ist.

7. Rotor nach einem der Ansprüche 1 bis 4 und 6, **dadurch gekennzeichnet, dass** der Polschuh (5) in der zweiten Schicht (11) einteilig mit wenigstens einem weiteren Haltesteg (13) ausgebildet ist.

8. Rotor nach einem der Ansprüche 5 bis 7, **dadurch gekennzeichnet, dass** der Permanentmagnet (4) und der Polschuh (5) über eine Klebeschicht (26) miteinander verbunden sind.

9. Rotor nach einem der Ansprüche 1 bis 8, **dadurch gekennzeichnet, dass** der Polschuh (5) aus mehreren Schichten (51, 52, 53, 54) aufgebaut ist, wobei die Schichten (51, 52, 53, 54) parallel zu den ersten und zweiten Schichten (1, 11) angeordnet sind, so dass senkrecht zur Drehachse (2) des Rotors (16) magnetische Flusssperren im Polschuh (5) ausgebildet sind.

10. Rotor nach einem der Ansprüche 1 bis 9, **dadurch gekennzeichnet, dass** die erste und die zweite Schicht (1, 11) in den Aufnahmebereichen (3, 12) unterschiedliche Formen aufweisen, wobei in der zweiten Schicht (11) ein Raum für den Polrücken (15) vorgesehen ist, wobei sich in der ersten Schicht (1) der Aufnahmebereich (3) bis zu den Permanentmagneten (4) erstreckt, wobei die erste und zweite Schicht in Richtung auf einen Stator (17) im wesentlichen die gleiche Form aufweisen.

11. Rotor nach einem der Ansprüche 1 bis 10, **dadurch gekennzeichnet, dass** sich die Aufnahmebereiche (3, 12) parallel zu einer Drehachse (2) des Rotors (16) erstrecken.

## Claims

1. Rotor (16) for a permanent-magnet machine with at least two differently poled permanent magnets, wherein the rotor has at least two layers (1, 11), wherein a first layer (1) is formed from a magnetically conducting material and a second layer (11) is formed from a magnetically non-conducting material, **characterised in that** the first and the second layer (1, 11) are arranged in the form of a layer package and form two receiving areas (3, 12), which are laterally delimited by retaining webs (7, 13) of the respective layer (1, 11), that the permanent magnets (4) are arranged in the receiving areas (3, 12), that the first and the second permanent magnet (4) is connected to the first layer (1) in a magnetically conducting manner, and that the retaining webs (7) of the magnetically conducting first layer (1) consist of a non-magnetically conducting material.

2. Rotor according to claim 1, **characterised in that** a magnetically conducting insert part (15) as a pole rear is provided between the first and the second permanent magnet (4) and the magnetically non-conducting second layer (11), and that the insert part (15) is arranged laterally adjacent to the magnetically conducting first layer (1).

3. Rotor according to one of claims 1 or 2, **characterised in that** the retaining webs (7) of the magnetically conducting first layer (1) are embodied as insert parts, which are connected in a form-fit manner with the first layer (1).

4. Rotor according to claim 3, **characterised in that** the retaining webs (7) are connected to the first layer (1) with the aid of a dovetail connection, in particular a form-fit connection.

5. Rotor according to one of claims 1 to 4, **characterised in that** a pole shoe (5) is assigned to each permanent magnet (4), the pole shoe (5) is arranged in the receiving area (3, 12) and is fastened in a form-fit manner to the retaining webs (7, 13).

6. Rotor according to one of claims 1 to 4, **characterised in that** in the first layer (1) the pole shoe (5) is embodied in one piece with at least one retaining web (7).

7. Rotor according to one of claims 1 to 4 and 6, **characterised in that** in the second layer (11) the pole shoe (5) is embodied in one piece with at least one further retaining web (13).

8. Rotor according to one of claims 5 to 7, **characterised in that** the permanent magnet (4) and the pole shoe (5) are connected to one another by way of an adhesive layer (26).

9. Rotor according to one of claims 1 to 8, **characterised in that** the pole shoe (5) is made up of several layers (51, 52, 53, 54), wherein the layers (51, 52, 53, 54) are arranged in parallel with the first and second layers (1, 11) so that magnetic flux barriers in the pole shoe (5) are embodied at right angles to the axis of rotation (2) of the rotor (16).

10. Rotor according to one of claims 1 to 9, **characterised in that** the first and the second layer (1, 11) in the receiving areas (3, 12) have different shapes, where provision is made in the second layer (11) for a space for the pole rears (15), wherein in the first layer (1) the receiving area (3) extends up to the permanent magnets (4), wherein the first and second layer in the direction of a stator (17) have essentially the same shape.

11. Rotor according to one of claims 1 to 10, **characterised in that** the receiving areas (3, 12) extend in parallel to an axis of rotation (2) of the rotor (16).

## Revendications

1. Rotor (16) pour une machine à aimant permanent ayant au moins deux aimants permanents polarisés différemment,
le rotor ayant au moins deux couches (1, 11), une première couche (1) en un matériau conducteur magnétiquement et une deuxième couche (11) en un matériau non conducteur magnétiquement, **caractérisé en ce que**
les première et la deuxième couches (1, 11) sont disposées sous la forme d'un paquet de couches et forment deux parties (3, 12) de réception qui sont délimitées latéralement par des entretoises (7, 13) de retenue de la couche (1, 11) respective, **en ce que** les aimants (4) permanents sont disposés dans les parties (3, 12) de réception, **en ce que** les premier et deuxième aimants (4) permanents sont reliés d'une manière conductrice magnétiquement à la première couche (1) et **en ce que** les entretoises (7) de retenue de la première couche (1) conductrice magnétiquement sont en un matériau non conducteur magnétiquement.

2. Rotor suivant la revendication 1, **caractérisé en ce que**, entre les premier et deuxième aimants (4) permanents et la deuxième couche (11) non conductrice magnétiquement, il est prévu comme dos polaire une pièce (15) d'insertion conductrice magnétiquement et **en ce que** la pièce (15) d'insertion est disposée latéralement à côté de la première couche (1) conductrice magnétiquement.

3. Rotor suivant l'une des revendications 1 ou 2, **caractérisé en ce que** les entretoises (7) de retenue de la première couche (1) conductrice magnétiquement sont constituées sous la forme de pièces d'insertion qui sont reliées à complémentarité de forme avec la première couche (1).

4. Rotor suivant la revendication 3, **caractérisé en ce que** les entretoises (7) de retenue sont, à l'aide d'une liaison en queue d'aronde notamment d'une liaison à complémentarité de forme, reliée à la première couche (1).

5. Rotor suivant l'une des revendications 1 à 4, **caractérisé en ce qu'**un sabot (5) polaire est associé à chaque aimant (4) permanent, **en ce que** le sabot (5) polaire est disposé dans la partie (3, 12) de réception et est fixé à complémentarité de forme aux entretoises (7, 13) de retenue.

6. Rotor suivant l'une des revendications 1 à 4, **caractérisé en ce que** le sabot (5) polaire est réalisé dans la première couche (1) d'une seule pièce avec au moins une entretoise (7) de retenue.

7. Rotor suivant l'une des revendications 1 à 4 et 6, **caractérisé en ce que** le sabot (5) polaire est constitué dans la deuxième couche (11) d'une seule pièce avec au moins une autre entretoise (13) de retenue.

8. Rotor suivant l'une des revendications 5 à 7, **caractérisé en ce que** l'aimant (4) permanent et le sabot (5) polaire sont reliés entre eux par une couche (26) de colle.

9. Rotor suivant l'une des revendications 1 à 8, **caractérisé en ce que** le sabot (5) polaire est formé de plusieurs couches (51, 52, 53, 54), les couches (51, 52, 53, 54) étant disposées parallèlement aux première et deuxième couches (1, 11) de manière à constituer, dans le sabot (5) polaire et perpendiculairement à l'axe (2) de rotation du rotor (16), des barrages au flux magnétique.

10. Rotor suivant l'une des revendications 1 à 9, **caractérisé en ce que** les première et deuxième couches (1, 11) ont dans les parties (3, 12) de réception des formes différentes, un espace pour le dos (15) polaire étant prévu dans la deuxième couche (11), la partie (3) de réception s'étendant dans la première couche (1) jusqu'aux aimants (4) permanents, les première et deuxième couches ayant sensiblement la même forme dans la direction d'un stator (17).

11. Rotor suivant l'une des revendications 1 à 10, **caractérisé en ce que** les parties (3, 12) de réception s'étendent parallèlement à un axe (2) de rotation du rotor (16).
